# EUROPEAN PATENT SPECIFICATION

(11) **EP 2 009 937 B1**
(45) Date of publication and mention of the grant of the patent: **15.08.2012**
(21) Application number: 07711040.1
(22) Date of filing: 02.03.2007
(51) Int. Cl.: H04W 84/00, H04M 15/00

(54) **A METHOD, SYSTEM AND DEVICE OF ACCOUNTING FOR GROUP SERVICE**
VERFAHREN, SYSTEM UND EINRICHTUNG ZUR BUCHHALTUNG FÜR GRUPPENDIENST
PROCÉDÉ, SYSTÈME ET DISPOSITIF DE FACTURATION D'UN SERVICE DE GROUPE

(30) Priority: 20.04.2006 CN 200610075940
(43) Date of publication of application: 31.12.2008
(73) Proprietor: Huawei Technologies Co., Ltd., Shenzhen, Guangdong Province 518129 (CN)
(72) Inventor: SHAN, Mingjun, Shenzhen, Guangdong Province 518129 (CN)
(74) Representative: Pfenning, Meinig & Partner GbR
(86) International application number: PCT/CN2007/000680
(87) International publication number: WO 2007/121652

(56) References cited:
- WO-A-03/045044
- WO-A-2005/076589
- WO-A2-03/045044
- CN-A- 1 473 443
- CN-A- 1 585 519
- US-A1- 2002 068 546
- US-A1- 2005 287 982
- SA5 (GAVIN WONG@VODAFONE COM): "Correction to the PS specific information for location based PoC charging" 3GPP DRAFT; 32272_CR0011_(REL-6)_S5-064497, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Warsaw, Poland; 20060513, 13 May 2006 (2006-05-13), XP050207139 [retrieved on 2006-05-13]
- "Digital cellular telecommunications system (Phase 2+); Universal Mobile Telecommunications System (UMTS); Telecommunication management; Charging management; Push-to-talk over Cellular (PoC) charging (3GPP TS 32.272 version 7.4.0 Release 7); ETSI TS 132 272" ETSI STANDARDS, LIS, SOPHIA ANTIPOLIS CEDEX, FRANCE, vol. 3-SA5, no. V7.4.0, 1 June 2007 (2007-06-01), XP014038290 ISSN: 0000-0001
- "3GPP TS 32.272 V1.0.0 (2005-02); 3rd Generation Partnership Project; Technical Specification Group Service and System Aspects;Telecommunication managment; Charging management; Push-to-talk over Cellular (PoC) charging; (Release 6)" 3GPP TS 32.272 V1.0.0, XX, XX, 1 February 2005 (2005-02-01), page complete, XP002343600

## Description

### Field of the Invention

The present invention relates to group mode services in a communication network, and in particular, to a method of accounting for a group mode service, corresponding application server and charging system, and system for realizing a group mode service.

### Background of the Invention

Group mode services include various services of different types, such as Instant Message (IM), Presence, Push to Talk over Cellular (PoC) and the like. Group mode services have a common characteristic, that is, after a session initiator initiates a session, all users belonging to the same group may select to participate in the session, and users who have participated in the session may also select to exit the session. In other words, in a group mode service, the number of users participating in a session is variable.

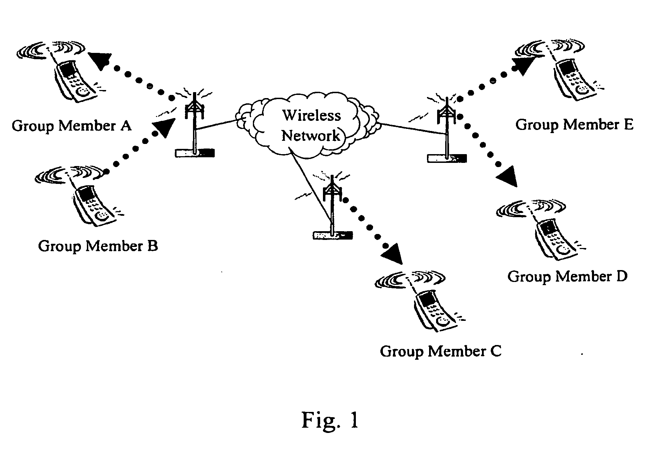

Taking a PoC service for example, it is a Push-to-talk service employing VoIP technology based on a mobile cellular public network. After a PoC user sets a group list, the user may have a point-to-point semi-duplex conversation with other PoC users or have a point-to-multipoint semi-duplex conversation with users in a group that is preset, by only pressing a dedicated key. Figure 1 shows a schematic diagram of point-to- multipoint communication in a PoC service.

A PoC server plays in a PoC service a role of realizing application layer network functions including controlling PoC function and participating PoC function.

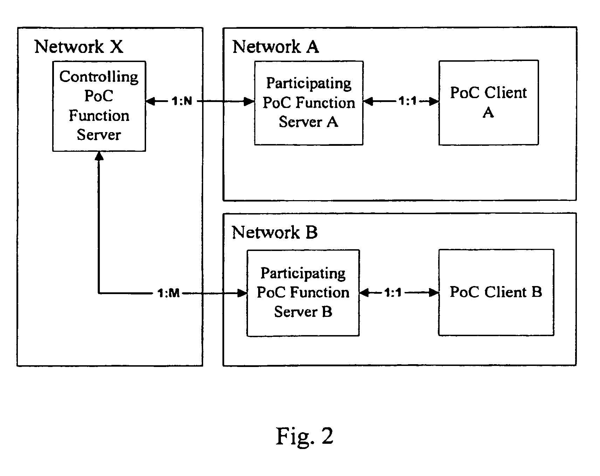

Figure 2 is a structural diagram when a PoC Server in which controlling PoC function exists and a PoC Server in which participating PoC function exists belong to different networks. In a point-to-point PoC session and an Ad-hoc PoC session, a PoC Server that acts as an inviting party performs controlling PoC function; while in a PoC chat group and a Pre-arranged group session, a PoC Server that has group identification (ID) performs controlling PoC function. For point-to-multipoint PoC communication, if there are N participants in a PoC session, there will be N interacting paths for transmitting media and signaling when a PoC Server performs controlling PoC function.

During accounting for a PoC service, accounting factors of a session service mainly include the following:
PoC session type, such as Ad-hoc, Pre-arranged and Chat PoC;
the number of participations in a group of the PoC session, or the number of recipients of a Talk Burst;
service network ID; and
applying time of the PoC Service, etc.

At present, in accounting solutions of the prior art, for example, in an Ad-hoc accounting solution or a Pre-arranged accounting solution, accounting is performed on a session owner or a session participant. When accounting is performed on a session owner, it is usually started by a PoC Server in which controlling PoC function exists; whereas when accounting is performed on a session participant, it is usually started by a PoC Server in which participating PoC function exists.

In the prior art, an accounting rate with respect to a session owner should be adjusted according to variation of the number of PoC participants; moreover, each time a PoC Server receives a SIP message (including an INVITE message and a BYE message), it triggers an Accounting Request (ACR) to an charging system, and the charging system replies an Accounting Answer (CCR) at the same time. In this way, when a lot of users participate in a session, a large amount of ACRs and CCRs should be delivered between the PoC Server and the charging system, and thereby consumption of system resources is very large.

D1 (XP050207139) discloses PoC session Related CDRs. In the case of PoC group sessions, accounting information for SIP sessions is transferred from the PoC server to the CDF using Diameter ACR Start, Interim and Stop messages. A PoC session CDR is opened in the CDF upon reception of a Diameter ACR [Start] message. Partial CDRs may be generated upon reception of a Diameter ACR [Interim] message. The Diameter ACR [Interim] message is sent by the network entity towards the CDF due to a session modification procedure (i.e. change in media), due to a change to location of the user, or due to usage threshold (e.g. volume, duration, number of change conditions).

D2 (XP14038290) discloses PoC session Related CDRs. In the case of PoC group sessions, accounting information for SIP sessions is transferred from the PoC server to the CDF using Diameter ACR Start, Interim and Stop messages. A PoC session CDR is opened in the CDF upon reception of a Diameter ACR [Start] message. Partial CDRs may be generated upon reception of a Diameter ACR [Interim] message. The Diameter ACR [Interim] message is sent by the network entity towards the CDF due to a session modification procedure (i.e. change in media), due to a change to location of the user, or due to usage threshold (e.g. volume, duration, number of change conditions).

D3 (XP002343600) discloses PoC session Related CDRs. In the case of PoC group sessions, accounting information for SIP sessions is transferred from the PoC server to the CDF using Diameter ACR Start, Interim and Stop messages. A PoC session CDR is opened in the CDF upon reception of a Diameter ACR [Start] message. Partial CDRs may be generated upon reception of a Diameter ACR [Interim] message, which is sent by the network entity towards the CDF due to a session modification procedure (i.e. change in media). Session CDRs are updated, or partial CDRs are generated upon reception of a diameter ACR [Interim] message, which is sent by the network entity due to expiration of the Accounting-Interim-Interval AVP.

D4 (WO 2005/076589) discloses a method comprising the step of : storing in a database (21) of the data part (2): an account value indicating a tariff, at least two types of telecommunication services, a first type of telecommunication services indicating one or more telecommunication services that decrease the account value, and a second type of telecommunication services indicating one or more telecommunication services that increase the account value, a rule-set for mapping a telecommunication service on a value by which the account value is to decreased or increased, and a list of subscribers that belong to the same group; detecting in the Service Handler part (1) a usage of the telecommunication service; retrieving in the Service Handler part (1) data from the data part (2) and sending the data to the Rating part (3); calculating in the Rating part (3) a new account value; receiving in the Service Handler part (1) the new account value from the Rating part (3); sending the new account value from the Service Handler part (1) to the Data part (1); and overwriting the account value with the new account value in the database (21).

D5 (WO 03/045044) discloses a system and a method for charging in a communication network, especially in an IP Multimedia network. The new charging system according to the present invention allows charging principles used in traditional telecom networks to be applied also in IP Multimedia networks.

### Summary of the Invention

Embodiments of the invention provide a method of accounting for a group mode service, which can reduce accounting-related signaling transmitted between an application server and a charging system.

The embodiments of the invention further provide an application server, a charging system and a system for realizing a group mode service.

A method of accounting for a group mode service includes the following steps:
sending, by an application server, an initial accounting request to a charging system in response to receiving a service request for establishing a group session from a client, to enable the charging system account at an initial rate; and
counting, by the application server, the number of online group users after receiving a session joining request or a session leaving request initiated by a group user; initiating an interim accounting request carrying information on the number of group users to the charging system to enable the charging system account at a rate corresponding to the number of the group users in response to determining that group scale is changed according to a preset variation threshold for the number of group users.

An application server includes a group mode service functional unit, and further includes:
a group scale determining unit, adapted to determine the current group scale according to the number of online users in a group;
a group scale change determining unit, adapted to determine that the group scale is changed according to a preset threshold for the number of group users; and
an accounting requesting unit, adapted to send an initial accounting request to a charging system according to a service request for establishing a group session initiated by a client, and initiate an interim accounting request, which carries information on the number of online group users or group scale information, to the charging system after the group scale is changed.

A system for realizing a group mode service includes an application server and a charging system, in which the application server is adapted to realize a group mode service, send an initial accounting request to the charging system according to a service request for establishing a group session initiated by a client, count the number of online group users within the group session after receiving a session joining request or a session leaving request initiated by a group user, determine the group scale according to the number of online group users, and initiate an interim accounting request, which carries information on the number of online group users or group scale information, to the charging system when it is determined that the group scale is changed according to a preset variation threshold for the number of group users; and

the charging system is adapted to receive the initial accounting request or interim accounting request initiated by the group application server, resolve the information on the number of online group users or group scale information carried in the interim accounting request, determine an initial rate according to the initial accounting request, determine a corresponding accounting rate according to the resolved information on the number of online group users or group scale information, and perform accounting according to the determined initial rate or corresponding accounting rate.

According to the embodiments of the invention, an application server counts the number of users in the current online session, determines the current group scale according to the counted result, and triggers accounting only when the group scale is changed, thereby greatly reducing accounting signaling interacted between the application server and the charging system, and decreasing occupation of network system resources.

### Brief Description of the Drawings

Figure 1 is a schematic diagram of the prior art illustrating a point-to-multipoint communication in a PoC service;

Figure 2 is a structural diagram of the prior art when a PoC Server in which controlling PoC function exists and a PoC Server in which participating PoC function exists belong to different networks;

Figure 3 is a flow chart of a method of accounting for a group-type service according to an embodiment of the invention;

Figure 4 is a block diagram illustrating a process of accounting for a group-type service by taking a PoC service as an example according to an embodiment of the invention;

Figure 5 is a flow chart illustrating accounting signaling of a group-type service by taking a PoC service as an example according to an embodiment of the invention;

Figures 6A-6F are flow charts illustrating signaling when an application server initiates an accounting request in different states by taking a PoC service as an example according to an embodiment of the invention;

Figure 7 is a schematic structural diagram of an application server according to an embodiment of the invention; and

Figure 8 is a schematic structural diagram of a charging system according to an embodiment of the invention.

### Detailed Description of the Embodiments

Embodiment of the present invention provides a method of accounting for a group mode service, which is as follows:

counting, by an application server, the number of users in the current online session after receiving a session joining or leaving request from a group user, detecting the current group scale according to the counted result, and determining whether the group scale is changed; and initiating an accounting request to a charging system if the group scale is changed; performing, by the charging system, accounting at a rate corresponding to the number of users in the current online session or the current group scale after receiving the accounting request.

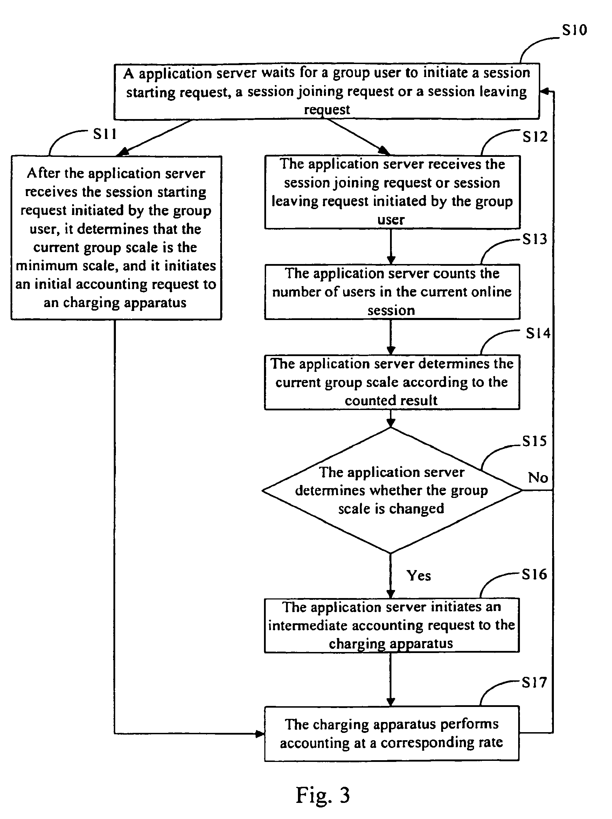

Referring to Figure 3, it is a flow chart showing steps of the method according to an embodiment of the present invention. In the process shown in Figure 3, before entering a normal session, the process includes the following: a client sends a group mode service request to an application server for requesting to establish a multi-party group session; the application server sends an initial accounting request to a charging system; the charging system returns an answer, which carries a triggering variable for a variation threshold for the number of users, to the application server, wherein the triggering variable meets a triggering condition, i.e., it is determined that the group scale is changed, when variation of the number of group users exceeds the variation threshold for the number of users, so that an interim accounting request is needed to be initiated to the charging system.

During the session, the application server monitors the triggering variable. Specifically, it includes the following steps.

At Step S10, the application server waits for a group user to initiate a session starting request, a session joining request or a session leaving request.

At Step S11, after the application server receives the session starting request initiated by the group user, it determines that the current group scale is an initial scale, and initiates an initial accounting request to a charging system. Then, the process turns to Step S 17.

At Step S12, the application server receives the session joining request or session leaving request initiated by the group user. Then, the process proceeds to Step S 13.

At Step S 13, the application server counts the number of users in the current online session. Then, the process proceeds to Step S14.

At Step S14, the application server determines the current group scale according to the counted result; in other words, it determines whether the triggering condition on the variation threshold for the number of users is met. Specifically, the process is as follows.

Corresponding relationship between group scales and ranges of the number of users delimited according to the variation threshold for the number of users is stored in advance in the application server. After the application server counts the number of group users in the current online session, it searches for the stored corresponding relationship and determines the current group scale. See the following Table 1.

**Table 1**

| Number Of Users | Group Scale |
|---|---|
| 0∼5 | Scale1 |
| 6∼15 | Scale2 |
| 16∼40 | Scale3 |
| >40 | Scale4 |

In the Table 1, the following three variation thresholds for the number of users are set: a first threshold "5", a second threshold "15" and a third threshold "40". The number of users is divided into four ranges.

In the Table 1, corresponding to the ranges of the number of users, there are totally four group scales, which are as follows:

a first group scale corresponds to a group scale ID "Scale 1";

a second group scale corresponds to a group scale ID "Scale2";

a third group scale corresponds to a group scale ID "Scale3"; and

a fourth group scale corresponds to a group scale ID "Scale4".

If the number of actual online users in the current session is less than or equal to the first threshold, it is determined that the current group scale is the "first group scale".

If the number of actual online users in the current session is greater than the first threshold and less than or equal to the second threshold, it is determined that the current group scale is the "second group scale".

If the number of actual online users in the current session is greater than the second threshold and less than or equal to the third threshold, it is determined that the current group scale is the "third group scale".

If the number of actual online users in the current session is greater than the third threshold, it is determined that the current group scale is the "fourth group scale".

It is supposed that the number of users counted currently is 8, because the number of users of 8 is greater than the first threshold and less than the second threshold, it is determined according to Table 1 that the current group scale is the second scale "Scale2".

At Step S15, the application server further determines whether the group scale is changed; and if the group scale is not changed, the process turns to Step S10; while when the group scale is changed, the process turns to Step S16. Specifically, the process is as follows.

The application server determines whether the current group scale determined is the same as the latest group scale, and if they are the same, it is determined that the group scale is not changed; while if they are different, it is determined that the group scale is changed.

For example, it is supposed that the latest group scale is the second scale "Scale2". If there are users exiting the session from time to time and the number of online users counted currently is 5, then it can be seen from Table 1 that the group scale determined currently shall be the first scale "Scale 1", that is to say, at this point, the group scale has been changed.

At Step S16, the application server initiates a new accounting request, i.e., an interim accounting request, to the charging system. Specifically,

1) when the application server initiates an interim accounting request to the charging system, the request carries information on the number of users; or

2) when the application server initiates an interim accounting request to the charging system, the request carries information on the current group scale determined.

At Step S17, the charging system performs accounting at a corresponding rate. Specifically,

if the charging system receives the initial accounting request, it performs accounting at the initial rate;

a first table of corresponding relationship and a second table of corresponding relationship are stored in the charging system;

corresponding relationship between the ranges of the number of users and the accounting rates is stored in first table of corresponding relationship;

corresponding relationship between the group scales and the accounting rates is stored in the second table of corresponding relationship;

after the charging system receives the interim accounting request carrying the information on the number of users, it searches the first table of corresponding relationship, determines the corresponding accounting rate by matching and performs accounting at the matched accounting rate; and

after the charging system receives the interim accounting request carrying the group scale information, it searches the second table of corresponding relationship, determines the corresponding accounting rate by matching and performs accounting at the matched accounting rate.

The above processing will be repeated until the current session ends.

Accounting mode that may be employed by the charging system includes online accounting mode or offline accounting mode.

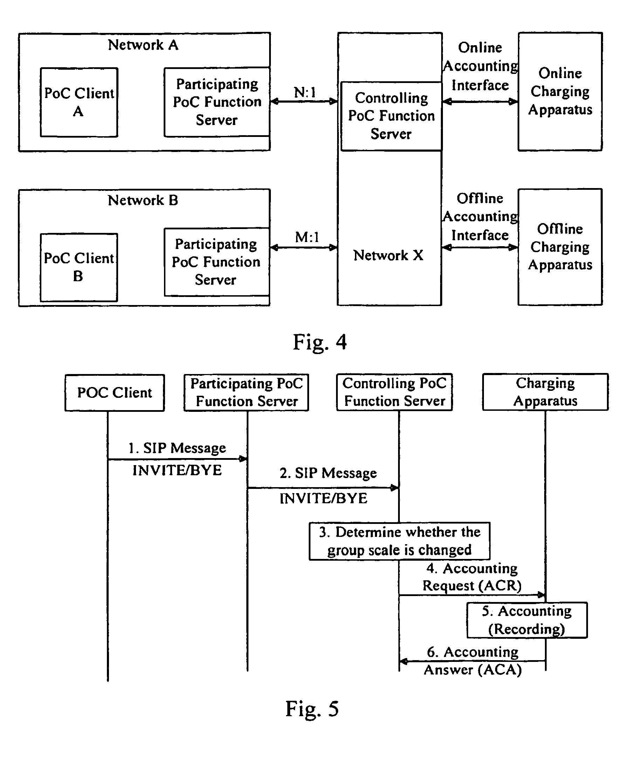

When the method of accounting according to an embodiment of the present invention is applied to a PoC service, a corresponding block diagram for performing accounting is shown in Figure 4. It is supposed that, N users in a PoC group and their corresponding participating PoC function server lie in a network A, M users and their corresponding participating PoC function Server lie in a network B, and a controlling function server for the group lies in a network X; media and signaling are transmitted between the controlling function server for the group and the participating PoC function Server in the network A via N interacting paths; and media and signaling are transmitted between the controlling function server for the group and the participating PoC function Server in the network B via M interacting paths. The controlling function server for the group is connected with an online charging system via an online accounting interface, or it is connected with an offline charging system via an offline accounting interface.

the method of accounting according to an embodiment of the present invention is applied to PoC service, specific accounting signaling is shown in Figure 5 and includes:

1) a PoC client sends a Session Initiated Protocol (SIP) message, which includes a SIP INVITE message or SIP BYE message, to a participating PoC function Server;

2) the participating PoC function Server forwards the SIP INVITE message or SIP BYE message to a controlling PoC function Server;

3) the controlling PoC function Server counts the number of users and determines whether group scale is changed; a specific determination method is shown by Step S14 and Step S15 in the flow chart shown in Figure 3;

4) after the controlling PoC function Server determines that the group scale is changed, it initiates an accounting request (ACR), which carries information on the number of the current online users or information on the current group scale, to a charging system;

5) after the charging system receives the accounting request, it performs accounting at a corresponding accounting rate according to the number of the current users or the group scale, and records the result of accounting; and

6) the charging system returns an accounting answer (ACA) to the controlling PoC function Server.

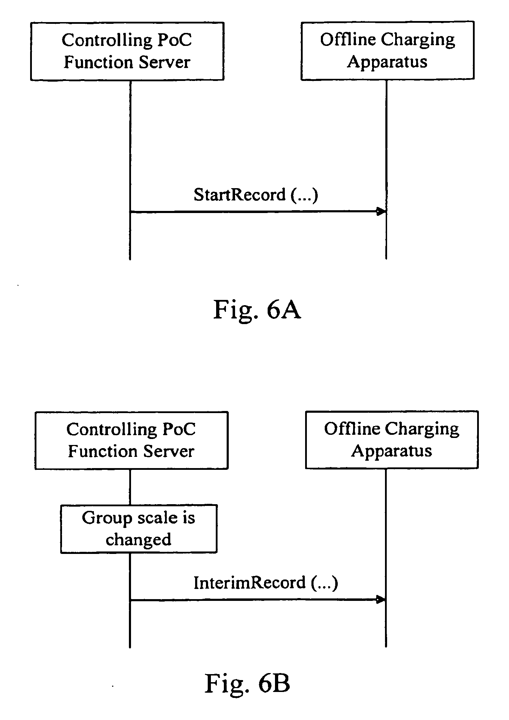

Specific situations in which the controlling PoC function Server initiates an accounting request to the charging system include the following six cases as shown in Figures 6A-6F.

When offline accounting mode is employed, the process in which the controlling PoC function Server triggers accounting is as follows.

1) When the controlling PoC function Server receives a session starting request initiated by a user, it initiates an initial accounting request to the offline charging system, as shown in Figure 6A; this accounting request message is StartRecord, which may carry information on the number of users of "1", or carry identification information of the minimum group scale, such as "Scale 1".

2) When a user joins or leaves the session, the controlling PoC function Server counts the number of the current users and determines whether the group scale is changed; when the group scale is changed, it initiates an interim accounting request to the offline charging system, as shown in Figure 6B; this accounting request message is InterimRecord, which may carry information on the number of users, such as "8", or carry identification information of the current group scale, such as "Scale2".

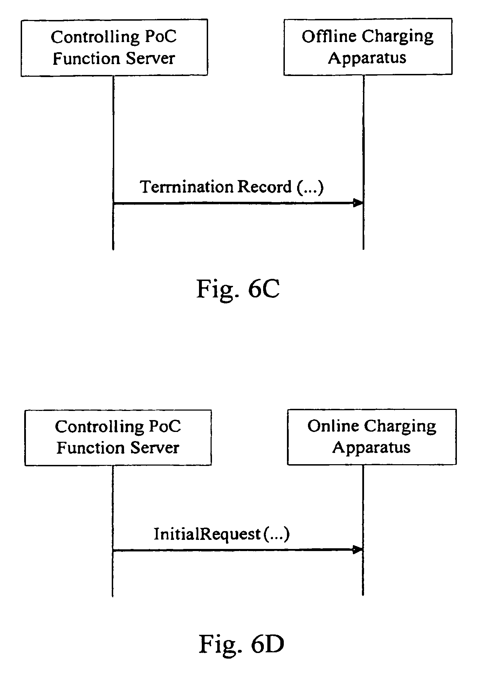

3) When the session initiator ends the current session, the controlling PoC function Server initiates an accounting termination request to the offline charging system, as shown in Figure 6C; this accounting request message is TerminationRecord.

When online accounting mode is employed, the process in which the controlling PoC function Server triggers accounting is as follows.

4) When the controlling PoC function Server receives a session starting request initiated by a user, it initiates an initial accounting request to the online charging system, as shown in Figure 6D; this accounting request message is InitialRequest, which may carry information on the number of users of "1", or carry identification information of the minimum group scale, such as "Scale 1".

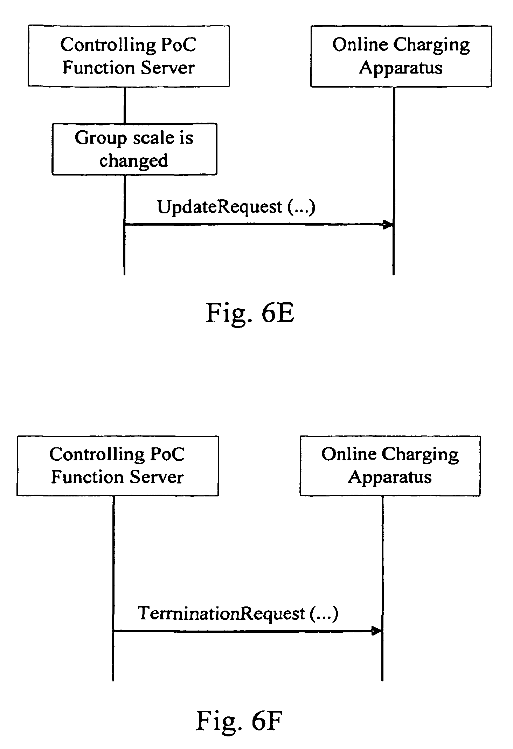

5) When a user joins or leaves the session, the controlling PoC function Server counts the number of the current users and determines whether the group scale is changed; when the group scale is changed, it initiates an accounting update request to the online charging system, as shown in Figure 6E; this accounting request message is UpdateRequest, which may carry information on the number of users, such as "8", or identification information of the current group scale, such as "Scale2".

6) When the session initiator ends the current session, the controlling PoC function Server initiates an accounting termination request to the online charging system, as shown in Figure 6F; this accounting request message is TerminationRequest.

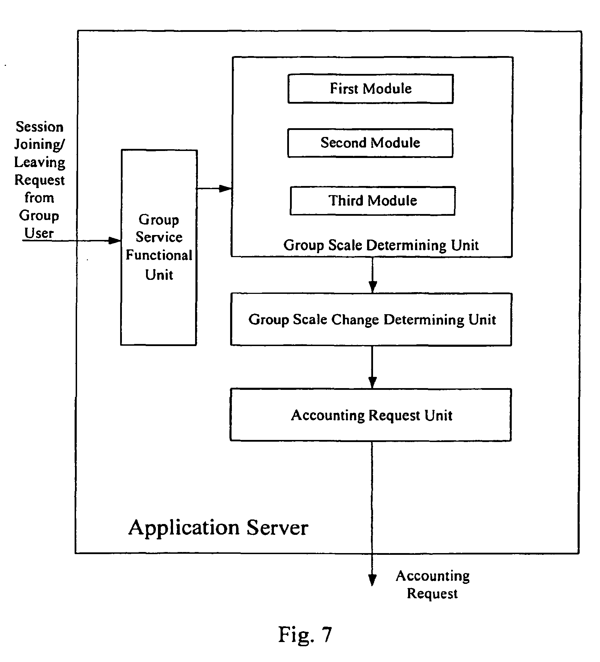

According to the above method of the embodiments of the invention, the invention provides an embodiment of a corresponding application server, of which a specific structure is shown in a schematic diagram of Figure 7. The application server includes a group mode service functional unit for realizing a group mode service, and it further includes:

a group scale determining unit adapted to determine the current group scale according to the number of online users in a group;

a group scale change determining unit adapted to determine whether the group scale is changed; and

an accounting requesting unit adapted to send an initial accounting request to a charging system according to a service request for establishing a group session initiated by a client, and initiate an interim accounting request, which carries information on the number of online group users or group scale information, to the charging system after the group scale is changed.

The group scale determining unit includes:

a first module adapted to receive a session joining/leaving request from a group user;

a second module adapted to compute the number of online group users in the current session; and

a third module adapted to determine the current group scale according to the counted result.

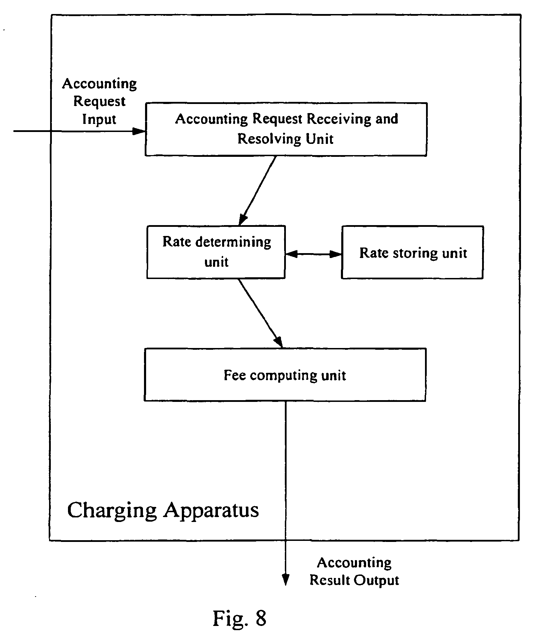

According to the embodiment of the above method of the invention, the invention provides an embodiment of a corresponding charging system, of which a specific structure is shown in Figure 8. The charging system includes:

an accounting request receiving and resolving unit adapted to receive an initial accounting request and an interim accounting request initiated by an application server, and resolve information on the number of online group users or group scale information carried in the interim accounting request;

a rate determining unit adapted to determine an initial rate according to the initial accounting request, and determine a corresponding accounting rate according to the resolved information on the number of online group users or group scale information; and

a fee computing unit adapted to perform accounting at the determined accounting rate.

The above charging system further includes a rate storing unit adapted to store a first table of corresponding relationship and a second table of corresponding relationship.

Corresponding relationship between range values of the number of users and accounting rates is stored in the first table of corresponding relationship.

Corresponding relationship between group scales and accounting rates is stored in the second table of corresponding relationship.

The rate determining unit searches the first table of corresponding relationship after it resolves the information on the number of online group users, or the rate determining unit searches the second table of corresponding relationship according to the resolved group scale information, then determines a corresponding accounting rate and notifies it to the fee computing unit; and the fee computing unit performs accounting at the determined accounting rate.

Additionally, the invention further provides a system for realizing a group mode service, which includes the above application server and charging system.

In conclusion, in the embodiments of the invention, an application server is used to compute the number of users in the current online session and determine the current group scale according to the counted result; accounting is triggered only when the group scale is changed. Therefore, accounting signaling interacted between the application server and the charging system may be reduced greatly, and occupation of network system resources may be decreased.

In the embodiments of the invention, accounting is performed at a corresponding rate according to the number of users that participate a session currently. Thus, practical service accounting requirements can be met better, thereby better promoting service consumption.

## Claims

1. A method of charging for a group mode service, comprising:
sending, by an application server, an initial accounting request to a charging system in response to receiving a service request for establishing a group session from a client, to enable the charging system account at an initial rate; and
counting, by the application server, the number of online group users after receiving a session joining request or a session leaving request initiated by a group user;
initiating an interim accounting request carrying information on the number of group users to the charging system to enable the charging system account at a rate corresponding to the number of the group users in response to determining that group scale is changed according to a preset variation threshold for the number of group users.

2. The method according to claim 1, further comprising:
receiving an answer carrying a triggering condition for the variation threshold for the number of users from the charging system,
wherein the determining that group scale is changed according to a preset threshold for the number of group users comprises: determining that variation of the number of group users exceeds the variation threshold for the number of users.

3. The method according to claim 1, further comprising:
delimiting corresponding ranges of the number of users according to the variation threshold for the number of users,
wherein the determining that the group scale is changed comprises: querying a corresponding relationship of the number of users which are delimited according to the variation threshold and the group scale; and determining that the group scale is changed according to the corresponding relationship.

4. The method according to claim 3, wherein the determining that the group scale is changed comprises:
determining two thresholds with the closest values after the computing the number of online group users in the current session;
delimiting a range of the number of users according to the two thresholds, and determining the current group scale according to the corresponding relationship; and
determining that the group scale is changed when the current group scale is different from the last group scale.

5. An application server (7), comprising a group mode service functional unit, wherein the application server further comprises:
a group scale determining unit, adapted to determine a current group scale according to a number of online users in a group;
a group scale change determining unit, adapted to determine that the group scale is changed according to a preset threshold for the number of group users; and
an accounting requesting unit, adapted to send an initial accounting request to a charging system according to a service request for establishing a group session initiated by a client, and initiate an interim accounting request, which carries information on the number of online group users or group scale information, to the charging system after the group scale is changed.

6. The application server according to claim 5, wherein the group scale determining unit comprises:
a first module adapted to receive a session joining/leaving request from a group user;
a second module adapted to compute the number of online group users in the current session after the first module receives a session joining/leaving request from a group user; and
a third module adapted to determine the current group scale according to a computed result.

7. The application server according to claim 6, wherein the application server receives an answer carrying a triggering condition for the threshold for the number of users from the charging system,
wherein the determining that the group scale is changed according to a preset threshold for the number of group users comprises: determining that variation of the number of group users exceeds the threshold for the number of group users.

8. The application server according to claim 6, wherein the application server stores a corresponding relationship between group scales and ranges of the number of users delimited according to the threshold for the number of users;
the determining the group scale is changed comprises: querying the corresponding relationship between the group scale and the number of users delimited according to the threshold for the number of users, and determining the group scale is changed according to the corresponding relationship.

9. A system for realizing a group mode service, comprising:
a application server (7), adapted to realize a group mode service, send an initial accounting request according to a service request for establishing a group session initiated by a client, count the number of online group users within the group session after receiving a session joining request or a session leaving request initiated by a group user, determine the group scale according to the number of online users in a group, and initiate an interim accounting request, which carries information on the number of online group users or group scale information, to the charging system when it is determined that the group scale is changed according to a preset variation threshold for the number of group users; and
a charging system (8) , adapted to receive the initial accounting request or interim accounting request initiated by the group application server, resolve the information on the number of online group users or group scale information carried in the interim accounting request, determine an initial rate according to the initial accounting request, determine a corresponding accounting rate according to the resolved information on the number of online group users or group scale information, and perform accounting at the determined initial rate or corresponding accounting rate.

10. The system according to claim 9, wherein the application server receives an answer carrying a triggering condition for the threshold for the number of users from the charging system,
the determining the group scale is changed according to a preset threshold for the number of group users comprises: detecting the variation of the number of group users exceeds the threshold for the number of group users.

11. The system according to claim 9, wherein the application server stores a corresponding relationship between group scales and ranges of the number of users delimited according to the threshold for the number of users;
the determining the group scale is changed comprises: querying the corresponding relationship between the group scale and the number of users delimited according to the threshold for the number of users, and determining the group scale is changed according to the corresponding relationship.

12. The system according to claim 9, wherein the charging system stores a table of corresponding relationship;
corresponding relationship between range values of the number of users and accounting rates is stored in the first table of corresponding relationship;
the first table of corresponding relationship is searched according to the resolved information on the number of online group users, and determines the corresponding accounting rate.

## Patentansprüche

1. Verfahren für die Gebührenbelastung für einen Gruppenmodusdienst, das Folgendes umfasst:
Senden durch einen Anwendungsserver einer anfänglichen Abrechnungsanforderung zu einem Gebührenbelastungssystem als Reaktion auf den Empfang einer Dienstanforderung zum Aufbauen einer Gruppensitzung von einem Kunden, um das Konto des Gebührenbelastungssystems mit einer anfänglichen Rate freizugeben; und
Zählen durch den Anwendungsserver der Anzahl von Online-Gruppenanwendern nach dem Empfangen einer Anforderung zum Beitreten einer Sitzung oder einer Anforderung zum Verlassen einer Sitzung, die von einem Gruppenanwender initiiert wird;
Initiieren einer vorläufigen Abrechnungsanforderung, die Informationen über die Anzahl von Gruppenanwendern führt, an das Gebührenbelastungssystem, um das Konto des Gebührenbelastungssystems mit einer Rate freizugeben, die der Anzahl der Gruppenanwender entspricht, als Reaktion auf die Bestimmung, dass sich die Gruppengröße geändert hat, in Übereinstimmung mit einem im Voraus festgelegten Veränderungsschwellenwert für die Anzahl von Gruppenanwendern.

2. Verfahren nach Anspruch 1, das ferner Folgendes umfasst:
Empfangen einer Antwort, die eine Auslösebedingung für den Veränderungsschwellenwert für die Anzahl von Anwendern führt, von dem Gebührenbelastungssystem,
wobei das Bestimmen in Übereinstimmung mit einem im Voraus festgelegten Schwellenwert für die Anzahl von Gruppenanwendern, dass sich die Gruppengröße geändert hat, Folgendes umfasst: Bestimmen, dass die Veränderung der Anzahl von Gruppenanwendern den Veränderungsschwellenwert für die Anzahl von Anwendern übersteigt.

3. Verfahren nach Anspruch 1, das ferner Folgendes umfasst:
Begrenzen entsprechender Bereiche der Anzahl von Anwendern in Übereinstimmung mit dem Veränderungsschwellenwert für die Anzahl von Anwendern,
wobei das Bestimmen, dass sich die Gruppengröße geändert hat, Folgendes umfasst: Abfragen einer entsprechenden Beziehung zwischen der Anzahl von Anwendern, die in Übereinstimmung mit dem Veränderungsschwellenwert begrenzt sind, und der Gruppengröße; und Bestimmen in Übereinstimmung mit der entsprechenden Beziehung, dass sich die Gruppengröße geändert hat.

4. Verfahren nach Anspruch 3, wobei das Bestimmen, dass sich die Gruppengröße geändert hat, Folgendes umfasst:
Bestimmen von zwei Schwellenwerten mit den nächsten Werten nach dem Berechnen der Anzahl von Online-Gruppenanwendern in der momentanen Sitzung;
Begrenzen eines Bereichs der Anzahl von Anwendern in Übereinstimmung mit den zwei Schwellenwerten und Bestimmen der momentanen Gruppengröße in Übereinstimmung mit der entsprechenden Beziehung; und
Bestimmen, dass sich die Gruppengröße geändert hat, wenn sich die momentane Gruppengröße von der letzten Gruppengröße unterscheidet.

5. Anwendungsserver (7), der eine Gruppenmodusdienst-Funktionseinheit umfasst, wobei der Anwendungsserver ferner Folgendes umfasst:
eine Gruppengrößen-Bestimmungseinheit, die dafür ausgelegt ist, eine momentane Gruppengröße in Übereinstimmung mit einer Anzahl von Online-Anwendern in einer Gruppe zu bestimmen;
eine Gruppengrößen-Änderungsbestimmungseinheit, die dafür ausgelegt ist, in Übereinstimmung mit einem im Voraus festgelegten Schwellenwert für die Anzahl von Gruppenanwendern zu bestimmen, dass sich die Gruppengröße geändert hat; und
eine Abrechnungsanforderungseinheit, die dafür ausgelegt ist, eine anfängliche Abrechnungsanforderung zu einem Gebührenbelastungssystem in Übereinstimmung mit einer Dienstanforderung zum Aufbauen einer Gruppensitzung, die von einem Kunden initiiert wird, zu senden und eine vorläufige Abrechnungsanforderung, die Informationen über die Anzahl von Online-Gruppenanwendern oder GruppengrößenInformationen führt, an das Gebührenbelastungssystem zu initiieren, nachdem sich die Gruppengröße geändert hat.

6. Anwendungsserver nach Anspruch 5, wobei die Gruppengrößen-Bestimmungseinheit Folgendes umfasst:
ein erstes Modul, das dafür ausgelegt ist, von einem Gruppenanwender eine Anforderung zum Beitreten/Verlassen einer Sitzung zu empfangen;
ein zweites Modul, das dafür ausgelegt ist, die Anzahl von Online-Gruppenanwendern in der momentanen Sitzung zu berechnen, nachdem das erste Modul eine Anforderung zum Beitreten/Verlassen einer Sitzung von einem Gruppenanwender empfangen hat; und
ein drittes Modul, das dafür ausgelegt ist, die momentane Gruppengröße in Übereinstimmung mit einem berechneten Ergebnis zu bestimmen.

7. Anwendungsserver nach Anspruch 6, wobei der Anwendungsserver eine Antwort, die eine Auslösebedingung für den Schwellenwert für die Anzahl von Anwendern führt, von dem Gebührenbelastungssystem empfängt,
wobei das Bestimmen in Übereinstimmung mit einem im Voraus festgelegten Schwellenwert für die Anzahl von Gruppenanwendern, dass sich die Gruppengröße geändert hat, Folgendes umfasst: Bestimmen, dass die Veränderung der Anzahl von Gruppenanwendern den Schwellenwert für die Anzahl von Gruppenanwendern übersteigt.

8. Anwendungsserver nach Anspruch 6, wobei der Anwendungsserver eine entsprechende Beziehung zwischen Gruppengrößen und Bereichen der Anzahl von Anwendern, die in Übereinstimmung mit dem Schwellenwert für die Anzahl von Anwendern begrenzt sind, speichert;
wobei das Bestimmen, dass sich die Gruppengröße geändert hat, Folgendes umfasst:
Abfragen der entsprechenden Beziehung zwischen der Gruppengröße und der Anzahl von Anwendern, die in Übereinstimmung mit dem Schwellenwert für die Anzahl von Anwendern begrenzt ist, und Bestimmen, dass sich die Gruppengröße geändert hat, in Übereinstimmung mit der entsprechenden Beziehung.

9. System zum Verwirklichen eines Gruppenmodusdienstes, das Folgendes umfasst:
einen Anwendungsserver (7), der dafür ausgelegt ist, einen Gruppenmodusdienst zu verwirklichen, eine anfängliche Abrechnungsanforderung in Übereinstimmung mit einer Dienstanforderung zum Aufbauen einer Gruppensitzung, die durch einen Kunden initiiert wird, zu senden, die Anzahl von Online-Gruppenanwendern in der Gruppensitzung zu zählen, nachdem eine Anforderung zum Beitreten einer Sitzung oder eine Anforderung zum Verlassen einer Sitzung, die von einem Gruppenanwender initiiert wird, empfangen worden ist, die Gruppengröße in Übereinstimmung mit der Anzahl von Online-Anwendern in einer Gruppe zu bestimmen und eine vorläufige Abrechnungsanforderung, die Informationen über die Anzahl der Online-Gruppenanwender oder Gruppengrößeninformationen führt, an das Gebührenbelastungssystem zu initiieren, wenn in Übereinstimmung mit einem im Voraus festgelegten Veränderungsschwellenwert für die Anzahl von Gruppenanwendern bestimmt wird, dass sich die Gruppengröße geändert hat; und
ein Gebührenbelastungssystem (8), das dafür ausgelegt ist, die anfängliche Abrechnungsanforderung oder die vorläufige Abrechnungsanforderung, die durch den Gruppenanwendungsserver initiiert wird, zu empfangen, die Informationen über die Anzahl von Online-Gruppenanwendern oder Gruppengrößeninformationen, die in der vorläufigen Abrechnungsanforderung geführt werden, aufzulösen, eine anfängliche Rate in Übereinstimmung mit der anfänglichen Abrechnungsanforderung zu bestimmen, eine entsprechende Abrechnungsrate in Übereinstimmung mit den aufgelösten Informationen über die Anzahl von Online-Gruppenanwendern oder
Gruppengrößeninformationen zu bestimmen und eine Abrechnung mit der bestimmten anfänglichen Rate oder der entsprechenden Abrechnungsrate auszuführen.

10. System nach Anspruch 9, wobei der Anwendungsserver eine Antwort, die eine Auslösebedingung für den Schwellenwert für die Anzahl von Anwendern führt, von dem Gebührenbelastungssystem empfängt,
das Bestimmen in Übereinstimmung mit einem im Voraus festgelegten Schwellenwert für die Anzahl von Gruppenanwendern, dass sich die Gruppengröße geändert hat, Folgendes umfasst: Detektieren, dass die Veränderung der Anzahl von Gruppenanwendern den Schwellenwert für die Anzahl von Gruppenanwendern übersteigt.

11. System nach Anspruch 9, wobei der Anwendungsserver eine entsprechende Beziehung zwischen Gruppengrößen und Bereichen der Anzahl von Anwendern, die in Übereinstimmung mit dem Schwellenwert für die Anzahl von Anwendern begrenzt sind, speichert;
das Bestimmen, dass sich die Gruppengröße geändert hat, Folgendes umfasst:
Abfragen der entsprechenden Beziehung zwischen der Gruppengröße und der Anzahl von Anwendern, die in Übereinstimmung mit dem Schwellenwert für die Anzahl von Anwendern begrenzt ist, und Bestimmen, dass sich die Gruppengröße geändert hat, in Übereinstimmung mit der entsprechenden Beziehung.

12. System nach Anspruch 9, wobei das Gebührenbelastungssystem eine Tabelle einer entsprechenden Beziehung speichert;
eine entsprechende Beziehung zwischen Bereichswerten der Anzahl von Anwendern und Abrechnungsraten in der ersten Tabelle einer entsprechenden Beziehung gespeichert ist;
die erste Tabelle einer entsprechenden Beziehung in Übereinstimmung mit den aufgelösten Informationen über die Anzahl von Online-Gruppenanwendern durchsucht wird und die entsprechende Abrechnungsrate bestimmt wird.

## Revendications

1. Procédé de facturation d'un service de groupe, comprenant :
l'envoi, par un serveur d'application, d'une requête de comptabilisation initiale à un système de facturation en réponse à la réception d'une requête de service d'établissement de session de groupe depuis un client, afin de permettre au système de facturation de comptabiliser à un tarif initial ; et
la comptabilisation, par le serveur d'application, du nombre d'usagers du groupe en ligne après la réception d'une requête de participation à une session ou d'une requête d'abandon de session lancée par un usager du groupe ;
le lancement d'une requête de comptabilisation provisoire comportant des informations sur le nombre d'usagers du groupe vers le système de facturation afin de permettre au système de facturation de comptabiliser à un tarif correspondant au nombre d'usagers du groupe en réponse à la détermination que l'échelle de groupe a changé en fonction d'un seuil de variation préétabli du nombre d'usagers du groupe.

2. Procédé selon la revendication 1, comprenant en outre :
la réception d'une réponse comportant une condition de déclenchement du seuil de variation du nombre d'usagers depuis le système de facturation,
dans lequel la détermination que l'échelle de groupe a changé en fonction d'un seuil préétabli du nombre d'usagers du groupe comprend : la détermination que la variation du nombre d'usagers du groupe dépasse le seuil de variation du nombre d'usagers.

3. Procédé selon la revendication 1, comprenant en outre :
la délimitation de plages correspondantes du nombre d'usagers en fonction du seuil de variation du nombre d'usagers,
dans lequel la détermination que l'échelle de groupe a changé comprend : l'interrogation d'une relation correspondante du nombre d'usagers qui sont délimités en fonction du seuil de variation et de l'échelle de groupe ; et la détermination que l'échelle de groupe a changé en fonction de la relation correspondante.

4. Procédé selon la revendication 3, dans lequel la détermination que l'échelle de groupe a changé comprend :
la détermination de deux seuils aux valeurs les plus proches après le calcul du nombre d'usagers du groupe en ligne dans la session en cours ;
la délimitation d'une plage du nombre d'usagers en fonction des deux seuils, et la détermination de l'échelle de groupe courante en fonction de la relation correspondante : et
la détermination que l'échelle de groupe a changé quand l'échelle de groupe courante est différente de la dernière échelle de groupe.

5. Serveur d'application (7) comprenant une unité fonctionnelle de service de groupe, le serveur d'application comprenant en outre :
une unité de détermination d'échelle de groupe, adaptée pour déterminer une échelle de groupe courante en fonction d'un nombre d'usagers en ligne dans un groupe ;
une unité de détermination de changement d'échelle de groupe, adaptée pour déterminer que l'échelle de groupe a changé en fonction d'un seuil préétabli du nombre d'usagers du groupe ; et
une unité de requête de comptabilisation, adaptée pour envoyer une requête de comptabilisation initiale à un système de facturation en fonction d'une requête de service d'établissement de session de groupe lancée par un client, et lancer une requête de comptabilisation provisoire, laquelle comporte des informations sur le nombre d'usagers du groupe en ligne ou des informations d'échelle de groupe, vers le système de facturation après que l'échelle de groupe a changé.

6. Serveur d'application selon la revendication 5, dans lequel l'unité de détermination d'échelle de groupe comprend :
un premier module, adapté pour recevoir une requête de participation à une session/d'abandon d'une session depuis un usager du groupe ;
un deuxième module, adapté pour calculer le nombre d'usagers du groupe en ligne dans la session courante après que le premier module a reçu une requête de participation à une session/d'abandon d'une session depuis un usager du groupe ; et
un troisième module, adapté pour déterminer l'échelle de groupe courante en fonction d'un résultat calculé.

7. Serveur d'application selon la revendication 6, le serveur d'application recevant une réponse comportant une condition de déclenchement du seuil du nombre d'usagers depuis le système de facturation,
dans lequel la détermination que l'échelle de groupe a changé en fonction d'un seuil préétabli du nombre d'usagers du groupe comprend : la détermination que la variation du nombre d'usagers du groupe dépasse le seuil du nombre d'usagers du groupe.

8. Serveur d'application selon la revendication 6, le serveur d'application mémorisant une relation correspondante entre des échelles de groupe et des plages du nombre d'usagers délimitées en fonction du seuil du nombre d'usagers ;
la détermination que l'échelle de groupe a changé comprenant : l'interrogation de la relation correspondante entre l'échelle de groupe et le nombre d'usagers délimités en fonction du seuil du nombre d'usagers, et la détermination que l'échelle de groupe a changé en fonction de la relation correspondante.

9. Système de réalisation d'un service de groupe, comprenant :
un serveur d'application (7), adapté pour réaliser un service de groupe, envoyer une requête de comptabilisation initiale en fonction d'une requête de service d'établissement de session de groupe lancée par un client, compter le nombre d'usagers du groupe en ligne dans la session de groupe après avoir reçu une requête de participation à une session ou une requête d'abandon de session lancée par un usager du groupe, déterminer l'échelle de groupe en fonction du nombre d'usagers en ligne dans un groupe, et lancer une requête de comptabilisation provisoire, laquelle comporte des informations sur le nombre d'usagers du groupe en ligne ou des informations d'échelle de groupe, vers le système de comptabilisation quand il est déterminé que l'échelle de groupe a changé en fonction d'un seuil de variation préétabli du nombre d'usagers du groupe ; et
un système de facturation (8), adapté pour recevoir la requête de comptabilisation initiale ou la requête de comptabilisation provisoire lancée par le serveur d'application du groupe, résoudre l'information du nombre d'usagers du groupe en ligne ou l'information d'échelle de groupe incluse dans la requête de comptabilisation provisoire, déterminer un tarif initial en fonction de la requête de comptabilisation initiale, déterminer un tarif de comptabilisation correspondant en fonction de l'information résolue du nombre d'usagers du groupe en ligne ou de l'information d'échelle de groupe, et exécuter une comptabilisation au tarif initial déterminé ou à un tarif de comptabilisation correspondant.

10. Système selon la revendication 9, dans lequel le serveur d'application reçoit une réponse comportant une condition de déclenchement du seuil du nombre d'usagers depuis le système de facturation,
la détermination que l'échelle de groupe a changé en fonction d'un seuil préétabli du nombre d'usagers du groupe comprenant : la détection que la variation du nombre d'usagers du groupe dépasse le seuil du nombre d'usagers du groupe.

11. Système selon la revendication 9, dans lequel le serveur d'application mémorise une relation correspondante entre des échelles de groupe et des plages du nombre d'usagers délimitées en fonction du seuil du nombre d'usagers ;
la détermination que l'échelle de groupe a changé comprenant : l'interrogation de la relation correspondante entre l'échelle de groupe et le nombre d'usagers délimités en fonction du seuil du nombre d'usagers, et la détermination que l'échelle de groupe a changé en fonction de la relation correspondante.

12. Système selon la revendication 9, dans lequel le système de facturation mémorise une table de relations correspondantes ;
la relation correspondante entre des valeurs de plages du nombre d'usagers et des tarifs de comptabilisation étant mémorisée dans la première table de relations correspondantes ;
la première table de relations correspondantes est explorée en fonction de l'information résolue sur le nombre d'usagers du groupe en ligne, et détermine le tarif de comptabilisation correspondant.
